# EUROPEAN PATENT APPLICATION

(11) **EP 4 059 687 A1**
(43) Date of publication of application: **21.09.2022**
(21) Application number: 21163352.4
(22) Date of filing: 18.03.2021
(51) Int. Cl.: B29B 17/02, B29B 17/00, B29B 17/04, B29L 7/00

(54) **SORTING OF RECYCLED PLASTIC FILM MATERIALS**

(71) Applicant: Trioworld Ombrée d'Anjou SAS, 49420 Pouancé (FR)
(72) Inventor: The designation of the inventor has not yet been filed
(74) Representative: AWA Sweden AB

(57) **Abstract**

A system (100) for recovering recycled polyethylene plastic film material is disclosed, comprising a first size reduction station (110) for forming a coarse fraction, a separation station (120) for forming a film fraction, a contaminant removal station (130) for removing non-polyethylene materials from the film fraction, and a baling station (150) for forming a bale (20) of the plastic film material and wrapping the bale in a plastic film. A corresponding method and a bale obtained by such a method are also disclosed.

## Description

### TECHNICAL FIELD

The present invention generally relates to recovering of recycled plastic materials. In particular, it relates to systems and methods for sorting and recovering recycled polyethylene film material from a flow of waste.

### BACKGROUND

The growing interest in conservation and recycling of material has led to an increasing demand for improved recovering techniques of different types of waste. On example is the post-consumer recycled (PCR) plastic, which is previously used material that is typically collected by local recycling programs and shipped to recycling facilities to be sorted into bales, based on the material. The bales may then be purchased and ground into small flakes and moulded into new items.

Separation and sorting of plastics represent a major challenge in the recycling processes. This is caused by the fact that plastic waste is generally not homogenous and may comprise many different types of plastic as well as non-plastic material. The sorting may for example be performed manually based on identification by shape, colour, appearance and trademark of the plastic that distinguishes it for visual identification by an operator. Manual sorting techniques may be useful in situations where plastic components are large enough to justify the time and effort involved, but is generally labour intensive, is associated with poor working environment and is economically unviable.

One attempt to improve the sorting is represented by the wet sorting technique, or sink-float sorting method, which utilises density differences between different plastic materials. In this method the plastic is shredded and placed in water, allowing for less dense pieces to float and more dense ones to sink. With this technique it is however challenging to separate materials having similar densities, and the separation is easily disturbed by entrapped air bubbles causing the pieces to float to the surface.

### SUMMARY

It would be advantageous to achieve a technique overcoming or alleviating at least some of the above-mentioned drawbacks. Hence, it would be desirable to enable improved recovering of recyclable plastic materials, and in particular post-consumer recycled (PCR) materials, such as for example recycled polyethylene films.

To better address one or more of these concerns, a system, a method and a bale having the features defined in the independent claims are provided. Preferable embodiments are defined in the dependent claims.

Hence, according to an aspect, a system for recovering recycled polyethylene film material from a flow of waste is provided. The system comprises several stations:
a first size reduction station configured to divide objects of the flow of waste into smaller pieces to form a coarse fraction;
a separation station configured to separate out pieces of plastic film material from the coarse fraction by means of an air flow, wherein the pieces of the plastic film material form a film fraction;
a contaminant removal station configured to remove non-polyethylene materials from the film fraction; and
a baling station for forming a bale of the plastic film material and wrapping the bale in a plastic film.

According to a second aspect, method for recovering recycled plastic film material from a flow of waste is provided. The method comprises the following steps:
dividing objects of the flow of waste to form a coarse fraction;
separating out pieces of the plastic film material from the coarse fraction, wherein the pieces form a film fraction;
removing non-polyethylene materials from the film fraction; followed by
forming a bale of the plastic film material; and
wrapping the bale in a plastic film.

According to a third aspect, a bale is provided, formed of recycled polyethylene film material wrapped in a polyethylene film and provided in the form of a plastic film material recovered from a flow of waste by means of a method according to the second aspect.

Optionally, the system according to the first aspect may comprise a second size reduction station, downstream of the contaminant removal station and upstream of the baling station, configured to further divide the pieces of the plastic film material of the film fraction to form a fine fraction. Accordingly, the method of the second aspect may comprise an additional and optional step of dividing the pieces of the plastic film material of the film fraction to form a fine fraction, such that the bale may be formed of such a fine fraction.

Generally, the present disclosure relates to recovering of polyethylene film material from a flow of waste which, in addition to the polyethylene film material itself may comprise various contaminants such as labels, additives, other types of plastic materials, non-plastic materials and the like. The contaminated polyethylene film material may be supplied to the system from bales, which in some examples may have been prepared from waste material that has been manually sorted in a prior step. After passing through the various stations of the system, which will be discussed in more detail below, the plastic film material may be formed into a bale and wrapped in a plastic film, preferably a polyethylene film similar to the plastic film material that has been recovered. Thus, the present disclosure provides a technique for transforming contaminated and previously used plastic film material into a fraction of a relatively high purity. The resulting product may be used in a subsequent recycling process, in which the plastic film material may be processed and prepared for the original purpose. The bale may for example be subject to a grinding step, in which the plastic film material of the bale, and, optionally, the plastic film in which the bale is wrapped, may be divided into pieces forming a fine fraction. Alternatively, a second size reduction station may be included in the system as discussed above, thereby allowing for the fine fraction to be formed prior to being baled and wrapped in the baling station.

In the context of the present disclosure, the term waste may refer to previously used material or by-products that may be collected and brought to a facility for sorting and recovering. The waste material may for example be referred to as PCR materials, or a PCR source, and may in some examples originate from industrially used films for packaging, wrapping, protection and the like. The present aspects provide a technique for sorting out and recovering, i.e., removing or extracting, polyethylene film material from a flow of waste, which thus in addition to the plastic film material may comprise a mix of contaminants such as non-plastic materials and plastics of other types than polyethylene. The waste may for example in addition to the polyethylene film material comprise aluminium foils and labels, RFID tags, staples, paper, carton, PET and the like.

During the recovering, the flow of waste may be processed to form different fractions, such as for example a coarse fraction, a film fraction or a fine fraction. Generally, a fraction may be understood as a portion into which the mixture of items of the flow of waste can be separated according to a physical property, such as size or type of material. The coarse fraction may hence be understood as a portion of the flow comprising relatively large pieces, especially compared to the pieces of the fine fraction. Further, the film fraction, which may be obtained by separating out pieces of plastic film material from at the separation station, may be understood as a portion of the coarse fraction obtained after removal of at least some objects that are not film-shaped, such as e.g. three-dimensional objects and heavier objects that are less likely to be captured by the air flow. The separation of the film fraction from the coarse fraction may thus be considered as a positive separation in which film-shaped objects generally may be picked out and heavier and/or three-dimensional objects generally may remain in the coarse fraction.

The first size reduction station may be configured to divide at least some of the objects of the flow of waste into smaller pieces forming the coarse fraction, for example by means of cutting or chopping. Preferably, the first size reduction station is configured to divide pieces of plastic film material of the flow of waste into a size that allows the plastic film material to be removed from the coarse fraction in the subsequent separation station, for example by means of air flow entrapment. The objects of the coarse fraction may advantageously be sufficiently large to facilitate the air flow separation at the separation station and removal of contaminants at the contaminant removal station, and sufficiently small to reduce the risk for folding and entrapment of contaminants.

Preferably, the first size reduction station may operate by means of a cutting edge or knife cutting the waste material on the conveyor along at least one of a first direction and a second direction. Preferable, the first and second directions are crossing each other, such as being orthogonal. In an example, the first direction may be perpendicular to the transporting direction of the conveyor, and the second direction parallel to the transporting direction. The separation between subsequent cuts in the respective directions may be selected so as to define a desired size of the pieces of the coarse fraction. The cutting, or chopping of the waste may for example be performed at regular intervals, such as every 10 to 40 cm along the conveyor, and with separation along the perpendicular direction of every 10 to 40 cm. Other measures are however possible as well and may preferably be adjustable prior to or during the operation of the system to allow for a fine-tuning of the process. The size of the particles of the coarse fraction may for example be varied based on the actual type and quality of the flow of waste, and on the performance and characteristics of the subsequent steps in the recovering process. In case the first size reduction station utilizes such a cutting edge for dividing the objects of the flow of waste into smaller pieces, each cut may for example be separated from the next by 10-40 cm, such as 20-30, and preferably by about 25 cm, along the feeding direction of the conveyor. Similarly, each cut along the perpendicular direction may be separated from each other by 10-40 cm, such as 20-30 cm, and preferably by about 25 cm. The size distribution of the pieces of the resulting coarse fraction may for practical reasons be difficult to define in definite terms and may thus instead be characterized by the process from which it is obtained. However, in some examples the pieces of the plastic film material of the coarse fraction may have an average width in the interval of 15-25 cm.

The separation station may employ an air sorting technique to separate pieces of plastic film material from the coarse fraction to form the film fraction. Generally, this may also be referred to as a dry gravity separation, or air sifting, and may hence operate without liquids such as water, chemical additives and drying requirements otherwise associated with wet sorting techniques. Thus, the air sorting technique is advantageous from an environmental point of view.

Comingled objects of the coarse fraction may for example be fed into a column-type air separator of the separation station, wherein an upward air flow may entrain lighter objects such as the pieces of plastic film material and cause them to be separated from heavier objects. Alternatively, or additionally the separation station may comprise an air table, wherein an air flow is combined with a deck or conveyor that is air permeable and inclined from a lower end to an upper end for sorting the objects according to density. The air table separation and the column-type air separation may further be combined with electrostatic separation, such as for example triboelectric separation, which makes use of electrostatic charging to facilitate the separation of the objects of the coarse flow. The triboelectrification may be achieved by a charging device such as a fluidized bed, a vibrating chute or a rotating drum. Since the electrostatic charging of the objects generally may be associated with surface charge, film-shaped pieces tend to be more charged than compact, three-dimensional objects, and the electrostatic charging may therefore be used to facilitate the separation of film-shaped pieces from the coarse flow.

The contaminant removal station may be configured to remove contaminants, such as non-polyethylene materials, from the film fraction. Examples of such contaminants include metallic materials, fiber-based materials, cellulosic materials, and textile materials. Further examples include other plastic materials such as polyester, polypropylene and polyamide. These other types of plastic materials may be considered as contaminants from a polyethylene recovering perspective but may of course be of interest from other perspectives. Thus, "contaminants" comprising for example polypropylene, PET and the like may be sorted out to form separate fractions that can be recovered and used for other purposes. The "contaminants" removed in the contaminant removal station may therefore not necessarily be discarded. Instead, they may be recovered and subject to further processing.

Various separation techniques may be employed depending on the type of material to be removed. Generally, the separation, or sorting, may involve detection (of contaminants) followed by ejection of the detected contaminants from the film fraction. The detection may for example involve optical analysis methods, in which contaminants may be identified by means of e.g. visible light, infrared light or X-rays. Contaminants may for example be distinguished from non-contaminants based on color, shape or chemical composition. Electrically conducting materials, such as metals, may be separated from the film fraction by means of eddy current separation or electrostatic separation techniques. Ferroelectric contaminants comprising for example iron may be removed by means of magnetic separation. Packaging tape may for example be identified by color and removed from the film fraction. Once identified, the contaminants may be ejected or removed by means of e.g. an air jet ejector or a robotic arm.

Mechanical sorting techniques may also be employed, including for example centrifugal force in which the pieces are sorted according to density.

The contaminant removal station may apply either positive sorting, in which the polyethylene plastic film pieces are identified and removed from the contaminants, or a negative sorting in which contaminants and contaminated plastic film pieces are identified and removed from the film fraction.

It is appreciated that the contaminant removal station may comprise two or more of the above exemplary techniques for increasing the polyethylene content of the film fraction. These techniques may be structurally integrated in a common station, or physically separated between two or more structurally distinct entities of the system.

According to an embodiment, the system may further comprise a cleaning station for washing and cleaning the plastic film material. The cleaning station may be arranged downstream of the contaminant removal station and, in case the system comprises a second size reduction station, upstream of the second size reduction station. The cleaning station may be configured to clean the plastic film materials in a wet cleaning process, for example based on water, followed mechanical and/or thermal drying. The cleaning station may be optional, and the use of such a station may for example depend on the cleanness of the waste material that is input to the process. In case the waste material has been preprocessed and cleaned before entering the system, the cleaning station may be omitted. However, in case the waste material has not be subject to a prior cleaning step, the cleaning station may be employed so as to further remove contaminants and impurities which may be difficult to remove in the contaminant removal station.

The second size reduction station may be configured to further divide at least some of the pieces of the plastic film material of the film fraction into smaller pieces forming the fine fraction. This may for example be achieved by means of grinding or shredding of the pieces. The grinder may further comprise a filtering mechanism, or a sieve, removing pieces having a minimum width above a predetermined threshold. The threshold may for example be about 5 cm or less, such as for example 3 cm or less. In some examples, at least 95% of the weight of the fine fraction is constituted by pieces having a largest dimension, or side to side measure, of 2 cm or less, such as between 1 and 2 cm. Thus, it will be appreciated that on average, the size (measured as the area) of the pieces of the fine fraction may be 1/10 or less of the size of the pieces of the coarse fraction. More specifically, the ratio may be less than 1/100, such that less than 1/1000.

The plastic film material, for example in the form of a fine fraction as outlined above, may be supplied to the baling station, wherein the recovered polyethylene plastic film material may be formed into a bale for subsequent handling and storage. Preferably, the baling station is further configured to wrap the bale in a plastic film, which according to some embodiments may be a polyethylene film, such as for example a blown stretch film. Thus, the product resulting from the above-described processing of the waste material may be a bale of recovered polyethylene film material wrapped in the same type of material, i.e., polyethylene film. The resulting product may advantageously be used in its entirety as raw material in subsequent processing, without the need of first removing any packing material.

According to an embodiment, a label may be printed directly on the wrapping of the bale. The printer may for example be included in the baling station. By printing the label directly on the wrapping there is no need for a potentially contaminating label of paper or other non-polyethylene materials, and the entire bale, including the wrapping and the label, may hence be regarded as high-grade raw material.

The resulting fraction, and potentially the bale including the wrapping, may have a purity of at least 98% polyethylene by weight, such that at least 99% polyethylene by weight. Should the system not include the cleaning station, the remaining contaminants may generally be of a kind that requires wet washing to remove. Such a washing step may often be integrated in a downstream step of the processing, or in a process used at a buyer's end.

It will be appreciated that the different stations as described above may form separate, structurally distinct entities of the system. However, the present disclosure is not limited to this. Rather, one or several of the stations or functionalities may be structurally integrated with each other. Thus, the first size reduction station and the separation station may for example be structurally integrated in a common station. Further, in some examples, the optional second size reduction station may be combined with the baling station and, if applicable, the label printer into a common station. Accordingly, the contaminant removal station may be a combined station in which one or several different sorting or separation steps are carried out, or a distributed station in which two or more sorting or separation units are arranged distant from each other. Further, the cleaning station may be integrated or co-located with the contaminant removal station or the second size reduction station.

It will be appreciated that other embodiments than those described above are also possible, ant that any features in the embodiments described above for the system according to the first aspect may be combined with the method and bale according to the second and third aspects, and vice versa.

Other objects, features and advantages of the enclosed embodiments will be apparent from the following detailed description, from the attached dependent claims as well as from the drawings. Those skilled in the art realize that different features of the present invention, even if recited in different claims, can be combined in embodiments other than those described in the following.

### BRIEF DESCRIPTION OF DRAWINGS

Exemplifying embodiments will now be described in more detail with reference to the following appended drawings, on which:
Figure 1 is a schematic representation of a system according to some embodiments;
Figure 2 schematically illustrates a first size reduction station according to some embodiments;
Figures 3a and 3b are schematic representations of pieces of the coarse fraction and the fine fraction, respectively;
Figure 4 schematically illustrates a separation station according to some embodiments;
Figure 5 schematically illustrates a contaminant removal station according to some embodiments; and
Figure 6 is a flow chart illustrating a method in accordance with some embodiments of the present disclosure.

As illustrated in the figures, the sizes of the elements and objects may have been modified for illustrative purposes and, thus, are provided to illustrate the general structure of the embodiments. Like reference numerals refer to like elements throughout.

### DETAILED DESCRIPTION

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

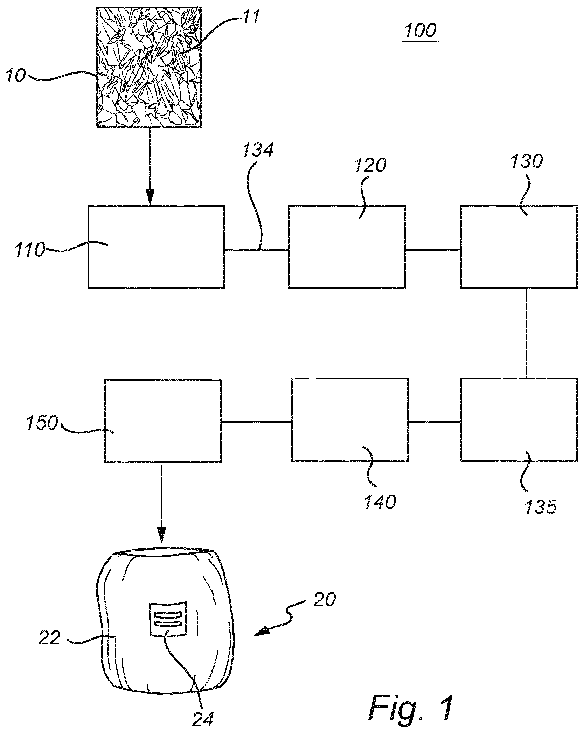

With reference to figure 1, a system 100 according to some embodiments of the present disclosure is provided. Figure 1 shows a system 100 for recovering previously used polyethylene plastic film material from a flow of waste 10. The waste 10 may for example be formed of post-consumer recycled plastics provided in the form of bales. The waste may hence, in addition to the plastic film material to be recovered, also comprise contaminants and impurities, such as for example aluminium foils and labels, RFID tags, staples, paper, carton, PET and the like. The present system 100 may be employed to process the waste in order to achieve a purified product, comprising a high-grade bale 20 of pieces of polyethylene film. It should be noted that the contaminants and impurities that are removed from the plastic film material can be recovered as separate fractions and subject to subsequent processing.

The system 100 comprises a plurality of stations for processing the flow of waste passing through the system 100. The stations may be formed as separate physical entities as indicated in the present figure or be integrated in one or several entities. The waste may be transported between the stations by means of a conveyor belt 134 or another transporting means known in the art.

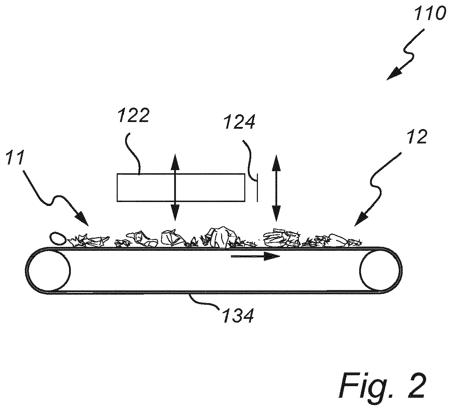

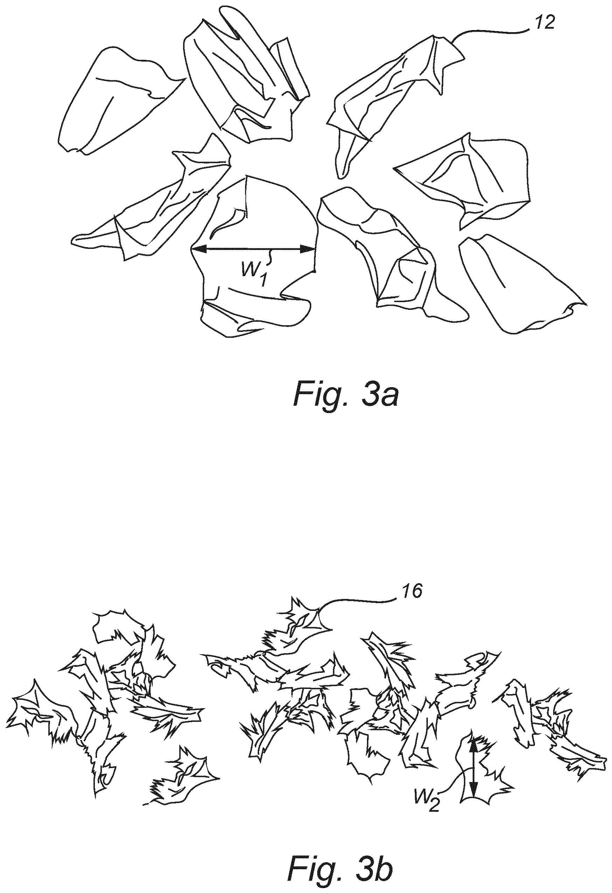

The waste may be provided to a first size reduction station 110, which may be configured to divide objects 11 of the flow of waste into smaller pieces to form a coarse fraction as illustrated in figures 2 and 3a.

The coarse fraction may then be fed to a separation station 120, which may be arranged downstream the first size reduction station 110 and configured to separate out pieces of plastic film material from the coarse fraction. This may for example be achieved by a positive separation, in which the desired pieces may be are removed from the coarse fraction and output as a film fraction for subsequent processing. It is appreciated that the film fraction may comprise other, non-plastic materials as well, including film-shaped or flat objects that may be entrained by the air flow. These objects may form part of the contaminants that are removed in the contaminant removal station, as will be described in the following.

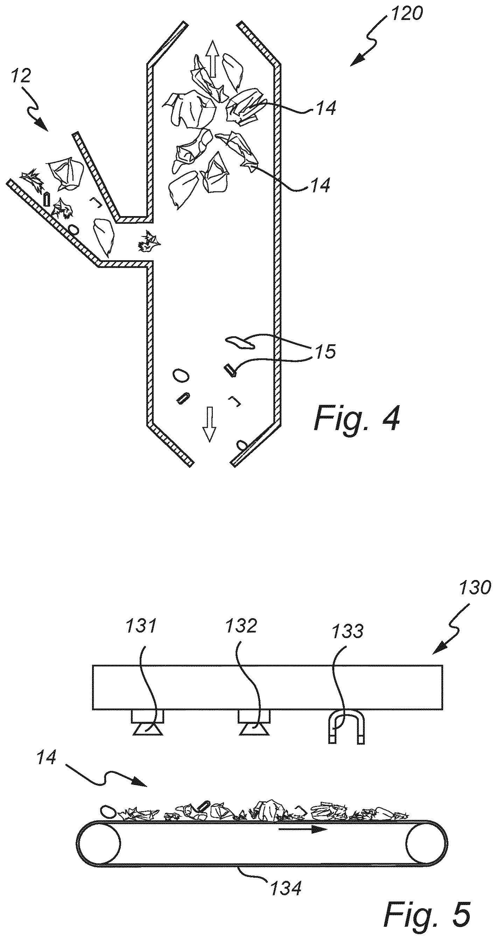

The film fraction may be provided to a subsequent contaminant removal station 130, wherein contaminants and impurities may be removed so as to further increase the polyethylene content of the film fraction. The contaminant removal station 130 may utilise several different techniques for removing various types of impurities, of which some examples will be discussed in more detail in connection with figure 5.

After the removal of contaminants, the film fraction may be provided to a cleaning station 135, in which the polyethylene film pieces may be subject to a washing and drying so as to further increase cleanness and remove contaminants and impurities that may remain from the processing in the contaminant removal station 130. The cleaning station 135 may for example comprise washing equipment, in which the film pieces may be washed using a liquid such as water, and a drying equipment employing for example a mechanical or thermal drying process. Examples of mechanical drying processes include centrifuging, spin drying or pressing/squeezing, whereas thermal drying may include hot air mixing.

The film fraction may further be provided to a second size reduction station 140, in which the polyethylene film pieces may be divided into smaller pieces suitable for subsequent processing such as washing and drying. The second size reduction station 140 may for example comprise a grinder or a shredder configured to divide the pieces into a fine fraction, or flakes. In some examples, the above-described cleaning station 135 may be arranged downstream of the second size reduction station 140.

The polyethylene pieces, or flakes, may then be baled in a baling station 150 and wrapped in a plastic film 22. The plastic film 22 may be a polyethylene film 22, allowing the wrapping to be used together with the polyethylene flakes in subsequent processes. The first fraction may be wrapped in at least three different layers: a first band forming the bale, and then two band wrapping the bale 20 along two different axes. Further, the bale 20 may be provided with a label 24 for increased traceability. The label 24 may be printed directly on the wrapping 22 so as to avoid adding any foreign, non-polyethylene material to the bale 20.

Figure 2 is an example of a first size reduction station as described above in connection with figure 1. The first size reduction station 110 may for example operate by means of cutting and may advantageously be configured to output a fraction having relatively large pieces compared to the pieces obtained by means of shredding. The first size reduction station 110 may for example comprise a cutting edge, or knife 122, 124 configured to cut or chop the waste at regular intervals across the feeding direction of the conveyor, and in some examples also along the feeding direction. The distance between subsequent cuts may be varied so as to provide a desired size distribution of the pieces of the plastic film material in the coarse fraction. The cutting edge 122, 124 may in some examples be arranged to cut the flow of waste at an interval of 30 cm along two different directions, so as to form the coarse fraction.

Figure 3a is an illustration of sample pieces 14 of plastic film material of the coarse fraction, obtained by cutting or chopping the flow of waste at regular intervals. A smallest width W1 of the pieces 14 of plastic film material may on average be about 25 cm, according to an example.

Figure 3b is an illustration of sample pieces 16 of plastic film material of the fine fraction, which may be obtained by letting the film fraction pass through a shredder or grinder of the second size reduction station 140. As indicated in the present figure, the pieces 14 or flakes may have much rougher edges than in the coarse fraction, and may have a largest width W2 of about 1-2 cm. In some examples, the pieces 16 of the film material of the fine fraction have an average size that is less than 1/10 of the average size of the pieces 14 of plastic film material of the coarse fraction, and in further examples less than 1/100. The size may in some examples be defined as an area, a circumference or an average width of the piece.

The separation station 120 will now be discussed in more detail with reference to figure 3, which illustrates an example of a separation station 120 operating by means of an air flow, which also be may referred to as air flow separation, or air sifting. With this technique, relatively large pieces 14 of plastic film material may be removed from the coarse fraction while other objects 15, such as three-dimensional objects, stick-shaped objects and heavier contaminants such as minerals may remain in the coarse fraction. The separation station 120 may comprise a column through which an upward air flow is provided. The coarse fraction from the first size reduction station 110, comprising smaller pieces 12 of waste material, may be fed into the column and the air flow passing therethrough. Pieces 14 that are relatively flat and light, including polyethylene film pieces, may be entrained by the air flow and transported upwards in the column, while pieces 15 that are less flat and light to be entrained by the airflow may fall downwards in the column. Thus, the present figure illustrates an example of a station 120 in which the pieces 14 of plastic film material may be separated from the coarse fraction to form a film fraction for subsequent processing and sorting.

Figure 5 illustrates an example of a contaminant removal station 130 according to an embodiment of the system in figure 1. While it is appreciated that several different methods and techniques may be employed to remove contaminants and impurities from the film fraction, the present figure illustrates one example of how to realise such a removal.

The exemplary contaminant removal station 130 combines three different techniques for removing contaminants from the film fraction: visual and infrared detection and removal, and magnetic separation. The pieces of plastic film 14 may be transported on a conveyor belt 134 passing through the contaminant removal station 130. The pieces of plastic film 14 are included in the film fraction together with possible contaminants such as other types of plastics, paper labels, RFID tags, paperclips, and adhesive tape. More specifically, the contaminant removal station 130 may be configured to remove other polymer films such as films of PET, PP and PVC, and complexes of aluminium and polyethylene. Further examples may include cellulosic esters (for example used in window envelopes).

The contaminant removal station 130 may operate in two steps: a first step for identifying/detecting a contaminant, and a second step for removing the identified contaminant. The identification may for example be based on optical analysis methods utilising a camera 131 and computer aided image recognition of shape and or colour, as well as composition analysis based on for example Fourier transform infrared spectroscopy (FTIR), wherein infrared light is captured by an IR sensor 132 and analysed for identifying the type of material. Once identified, a removal tool may be activated to remove the contamination from the conveyor. The removal tool may for example comprise an ejector configured to generate a stream of pressurised air pushing the contaminant off the conveyor, or a robotic arm for removing the contaminant. The relatively large pieces 14 of the coarse fraction may have the advantage of facilitating the contaminant removal process, since the relatively large size also reduced the number of pieces to analyse and, possibly, remove from the flow.

As indicated in the present figure, a magnetic field may also be employed to attract and remove metallic contaminants from the film fraction. In the present example, a magnet 133 may be provided to attract and separate ferromagnetic contaminants and impurities from the pieces of polyethylene film.

The film fraction may then be output from the contaminant removal station 130 and provided to the second size reduction station 140 as described in connection with figure 1.

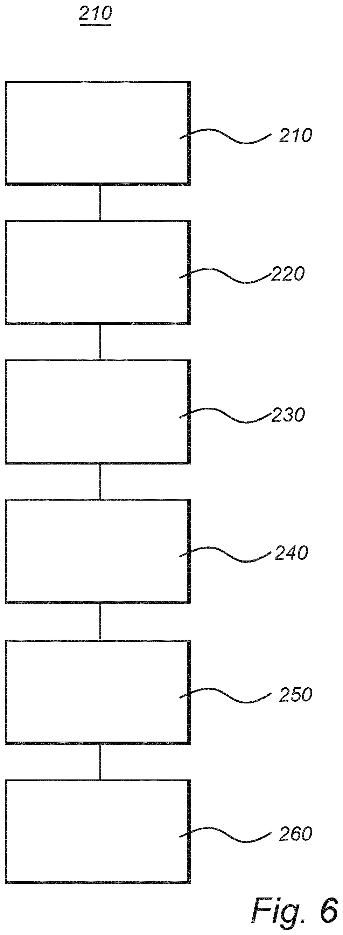

Figure 6 is a flow chart illustrating steps of a method 200 for recovering recycled plastic film material according to some embodiments. The method 200 may be performed in a system similar to the one disclosed in figure 1. Thus, a first step may comprise dividing 210 objects of the flow of waste to smaller pieces forming a coarse fraction. The dividing 210 may be performed in a first size reduction station.

The method 200 may further comprise a step of separating out 220 pieces of the plastic film material from the coarse fraction, wherein the pieces of the plastic film material form a film fraction. The separating 220 may be performed in a separating station. An object of the present separation step is to provide a film fraction having a reduced number of contaminants in the form of non-film shaped materials and materials having a higher density than the film material.

Subsequently, the method 200 may comprise one or several steps of removing 230 non-polyethylene materials from the film fraction. The removal may be performed in a contaminant removal station and may include various separation techniques such as for example air sifting, mechanical separation and electrostatic separation.

The film fraction may further be subject to an optional step of further dividing 240 the pieces of the plastic film material to form a fine fraction. This may be achieved by means of a second size reduction station and may for example include shredding. Thus, the average size of the pieces of plastic film material of the fine fraction may be several times smaller than the average size of the pieces of the plastic film material of the coarse fraction.

The method 200 may further comprise a step of forming 250 a bale of the fine fraction, preferable in a baling station, and a step of wrapping 252 the bale in a plastic film such as for example a polyethylene stretch film. The baling station may further be configured to print a label directly on the wrapping of the bale.

The present inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A system (100) for recovering recycled polyethylene plastic film material from a flow of waste (10), comprising:
a first size reduction station (110) configured to divide objects (11) of the flow of waste into smaller pieces (12) to form a coarse fraction;
a separation station (120) configured to separate out pieces (14) of plastic film material from the coarse fraction by means of an air flow, wherein the pieces of the plastic film material form a film fraction;
a contaminant removal station (130) configured to remove non-polyethylene materials from the film fraction; and
a baling station (150) for forming a bale (20) of the plastic film material and wrapping the bale in a plastic film.

2. The system according to claim 1, wherein the first size reduction station comprises a cutting edge (122, 124) configured to cut the flow of waste in a sequence of cuts for forming the coarse fraction, wherein two subsequent cuts are separated from each other by a distance of 10 to 40 cm.

3. The system according to claim 1, wherein the first size reduction station comprises a first cutting edge (122) configured to cut the flow of waste along a first direction and a second cutting edge (124) configured to cut the flow of waste along a second direction, intersecting the first direction.

4. The system according to any of the preceding claims, wherein the separation station is configured to operate by means of an upward air flow entraining the pieces of the plastic film material of the coarse fraction.

5. The system according to any of the preceding claims, wherein the contaminant removal station comprises a first tool (131, 132) for detecting contaminants of non-polyethylene material of the film fraction, and a second tool (133) for removing the contaminants.

6. The system according to any of the preceding claims, wherein the contaminant removal station is configured to remove non-polyethylene materials including at least one of metallic materials, fiber-based materials, cellulosic materials and textile materials.

7. The system according to any of the preceding claims, wherein the contaminant removal station is configured to remove non-polyethylene materials including polyester, polypropylene and polyamide.

8. The system according to any of the preceding claims, further comprising a cleaning station (135) configured to wash and dry the plastic film material.

9. The system according to any of the preceding claims, further comprising a second size reduction station (140), downstream of the contaminant removal station and upstream of the baling station, configured to further divide the pieces of the plastic film material of the film fraction to form a fine fraction (16).

10. The system according to claim 9, wherein the second size reduction station is configured to form the fine fraction by means of a grinder, and wherein pieces of the film material of the fine fraction have an average size that is less than 1/100 of the average size of the pieces of plastic film material of the coarse fraction.

11. The system according to any of the preceding claims, wherein the baling station is configured to wrap the plastic film material fraction in a polyethylene film (22).

12. The system according to any of the preceding claims, wherein the baling station comprises a printer configured to print a label (24) directly on the wrapping of the bale.

13. A method (200) for recovering recycled plastic film material from a flow of waste, comprising:
dividing (210) objects of the flow of waste to form a coarse fraction;
separating out (220) pieces of the plastic film material from the coarse fraction, wherein the pieces form a film fraction;
removing (230) non-polyethylene materials from the film fraction; followed by
forming (250) a bale of the plastic film material; and
wrapping (252) the bale in a plastic film.

14. A bale (20) of recycled polyethylene film material wrapped in a polyethylene film (22), wherein the polyethylene film material is provided in the form of a fraction recovered from a flow of waste (10) by means of a method according to claim 13.

15. The bale according to claim 14, wherein the fraction comprises a purity of at least 98% polyethylene by weight, such that at least 99% polyethylene by weight.
